# EUROPÄISCHE PATENTSCHRIFT

(11) **EP 0 582 593 B1**
(45) Veröffentlichungstag und Bekanntmachung des Hinweises auf die Patenterteilung: **20.12.1995**
(21) Anmeldenummer: 92908873.0
(22) Anmeldetag: 15.04.1992
(51) Int. Cl.: F16J 15/56, F16J 15/54, F16J 15/16, F16J 9/06

(54) **DICHTUNGSANORDNUNG**
SEALING DEVICE
GARNITURE D'ETANCHEITE

(30) Priorität: 30.04.1991 DE 4114114; 11.12.1991 DE 4140833
(43) Veröffentlichungstag der Anmeldung: 16.02.1994
(60) Teilanmeldung: 95101523.9
(73) Patentinhaber: Busak + Shamban GmbH & Co., D-70565 Stuttgart (DE)
(72) Erfinder: EDLUND, Roy, D-70771 Leinfelden-Echterdingen (DE); JORDAN, Holger, D-70771 Leinfelden-Echterdingen 1 (DE); POETHIG, Rolf, D-71088 Holzgerlingen (DE)
(74) Vertreter: KOHLER SCHMID + PARTNER
(86) Internationale Anmeldenummer: DE9200318
(87) Internationale Veröffentlichungsnummer: WO9219893

(56) Entgegenhaltungen:
- WO-A-89/12191
- WO-A-91/04430
- DE-A- 3 026 063
- DE-A- 3 828 692
- DE-A- 3 835 505
- DE-B- 1 675 910
- DE-B- 2 325 000
- DE-C- 3 521 525
- DE-C- 3 743 726
- FR-A- 2 547 387
- GB-A- 2 124 717
- US-A- 4 911 455

## Beschreibung

Die Erfindung geht aus von einer Dichtungsanordnung zwischen zwei zueinander hin- und herbewegten bzw. rotierenden konzentrischen Maschinenteilen mit einem Dichtring aus zähelastischem Kunststoff und einem den Dichtring radial spannenden Vorspannring aus einem gummielastischen Werkstoff, wobei das erste Maschinenteil eine Nut aufweist, die den Dichtring und den Vorspannring aufnimmt, und wobei, im drucklosen und/oder stationären Zustand bzw. im drucklosen Zustand, der Dichtring mit einer Dichtfläche an einer Umfangsfläche des zweiten Maschinenteils anliegt und in radialer Richtung zur Achse des zweiten Maschinenteils gesehen, zumindest teilweise von einer niederdruckseitigen Nutflanke der Nut beabstandet ist.

Eine derartige Dichtungsanordnung ist durch die DE-C-35 21 525 bekanntgeworden.

Die bekannte Dichtungsanordnung setzt sich aus einem Dichtring und einem Spannring zusammen, die in einer Nut eines Maschinenteils angeordnet sind. Die zu der abzudichtenden Welle weisende Umfangsfläche des Dichtrings wird durch zwei sich schneidende Kegelflächen gebildet, durch deren Schnittebene bereits eine Dichtkante vorgegeben ist. Im drucklosen Zustand liegt der Dichtring mit einer seiner beiden Kegelflächen auf der abzudichtenden Welle auf. Durch das Abheben dieser ersten Kegelfläche von der Welle unter Druckbeaufschlagung wird ein sich zur Hochdruckseite öffnender Keilspalt gebildet. Der Abhebvorgang ist beendet, wenn die zur Niederdruckseite der Nut weisende axiale Stirnfläche des Dichtrings parallel an der niederdruckseitigen Nutflanke der Nut anliegt. Da in dieser Endposition auch die niederdruckseitige Kegelfläche des Dichtrings nicht auf der Welle aufliegt, ist bei der bekannten Dichtungsanordnung eine Dichtkante unter Druckbeaufschlagung ausgebildet. Dabei muß jedoch der Spannring asymmetrisch ausgebildet sein, um einerseits ein weiteres Abheben der hochdruckseitigen Kegelfläche des Dichtringes zu verhindern und andererseits die erforderliche Anpreßkraft der Dichtkante auf die abzudichtende Welle zu erzeugen.

Aus der DE-A-24 58 529 ist eine Dichtungsanordnung bekannt, bei der der Dichtring im nicht eingebauten Zustand keine ausgeprägte Dichtkante aufweist. Die Dichtkante wird im eingebauten Zustand durch eine Kippbewegung ausgebildet, indem die Radialkraft eines auf den Dichtring wirkenden Spannrings den Dichtring um eine Drehachse kippt. Dabei wirken im drucklosen Zustand nur radial gerichtete Kräfte auf den Dichtring. Ist der bekannte Dichtring druckbeaufschlagt, so wird die Pressung im Bereich der Dichtkante abgeschwächt und der Dichtring kippt zur Niederdruckseite hin und liegt flächenhaft auf der abzudichtenden Fläche an.

Weiterhin ist aus der DE-B-23 25 000 eine Dichtungsanordnung bekannt, die sich durch extrem kleine Lekagen und eine sehr hohe Lebensdauer auszeichnet. Vereinzelt werden jedoch erhöhte Lekagen festgestellt.

Der Erfindung liegt daher die Aufgabe zugrunde, die Dichtwirkung der bekannten Dichtungsanordnung zu verbessern und deren Lebensdauer zu erhöhen.

Diese Aufgabe wird erfindungsgemäß dadurch gelöst, daß der Dichtring bei zwei zueinander hin- und herbewegten konzentrischen Maschinenteilen unter Druckbeaufschlagung und/oder durch die Reibkraft zwischen dem Dichtring und der Umfangsfläche bzw. bei zwei zueinander rotierenden konzentrischen Maschinenteilen unter Druckbeaufschlagung derart zur Niederdruckseite N hin verschwenkbar ist, daß der Dichtring an der niederdruckseitigen Nutflanke der Nut anliegt und gegenüber der Umfangsfläche eine Dichtkante ausbildet, wobei der Dichtring mit der Umfangsfläche einen sich zur Niederdruckseite N hin öffnenden Keilspalt bildet.

Die erfindungsgemäße Dichtungsanordnung hat damit den wesentlichen Vorteil, daß sie ohne ausgeprägte Dichtkante montiert werden kann. Die Querschnittsformen eines derartigen Dichtrings können einfach sein, weil sich druckbelastete und druckentlastete Flächen zur Dichtkante je nach Verschwenkungsgrad des Dichtrings vom drucklosen in den druckbelastenden Zustand einstellen.

Wird die Dichtungsanordnung im drucklosen Zustand eingesetzt und für Maschinenteile, die zueinander hin- und herbewegt werden, so verschwenkt sich der Dichtring von einer Einbaustellung in eine Arbeitsstellung derart, daß er immer an die Nutflanke gekippt wird, die entgegen der Bewegungsrichtung des bewegten Maschinenteils am ruhenden Maschinenteil ausgebildet ist. Die Niederdruckseite N entspricht in diesem Fall der Seite, auf die der Dichtring verschwenkt wird.

Der über einen Vorspannring vorgespannte Dichtring bildet mit seinen zu den Nutflanken gerichteten Flächen einen spitzen Winkel, der im drucklosen Zustand zwischen 10° und 40° betragen kann.

Ist der Dichtring symmetrisch aufgebaut, so ist er auch einfach zu montieren, weil auf die Einbaurichtung nicht geachtet werden muß. Der Dichtring kann bei symmetrischem Aufbau richtungsunabhängig jeweils derart mit einem hydraulischen Druck beaufschlagt werden, daß sich ein im Sinne der Erfindung vorgesehener Verschwenkvorgang einstellt.

Die besonders vorteilhafte Verwendung der erfindungsgemäßen Dichtungsanordnung als Stangen- und Kolbendichtung hat sich auch in Langzeitversuchen bestätigt. Die Standzeiten gegenüber bekannten Dichtungsanordnungen sind bei verringerter Leckrate deutlich erhöht.

Wird der Dichtring aus Polytetrafluorethylen gefertigt, so kann aus einem im drucklosen Zustand symmetrischen Dichtring ein im druckbeaufschlagten Zustand asymmetrischer Dichtring ausgeformt werden. Dabei fließt das Dichtringmaterial in durch Schrägflächen vorgegebene Freiräume, die sich aufgrund des Verschwenkvorganges in der Nut des Maschinenteils einstellen.

Aus Polyurethan gefertigte Dichtringe eignen sich besonders als Kolbendichtungen, weil sie abwechselnd aus unterschiedlichen Richtungen druckbeaufschlagt werden können und auch druckbelastet eine hohe Formstabilität aufweisen. Auch als Rotationsdichtung ist die erfindungsgemäße Dichtungsanordnung einsetzbar. Dabei wird über eine große Anlagefläche des Dichtrings an der niederdruckseitigen Nutflanke einer Rotationsbewegung mit dem sich bewegenden Maschinenteil entgegen gewirkt.

Als Stangendichtung ist die erfindungsgemäße Dichtungsanordnung auch im drucklosen Zustand einsetzbar. Die Verschwenkbewegung in die Arbeitsstellung erfolgt über die Reibung zwischen Dichtkante und abzudichtender Umfangsfläche.

Es versteht sich, daß auch die Nutflanken gegenüber den gegenüberliegenden Stirnflächen der Dichtringe im drucklosen Zustand geneigt sein können. Der Winkel zwischen Dichtring und niederdruckseitiger Nutflanke ist aber immer zur Umfangsfläche hin offen (Einbaulage). Auch die den Nutflanken zugewandten Stirnflächen des erfindungsgemäßen Dichtrings können unterschiedliche Neigungen aufweisen bzw. sie können stetig gekrümmt sein. Sind die Nutflanken des ersten Maschinenteils zu einer Ebene durch die Symmetrie-Achse des zweiten Maschinenteils geneigt, so kann der erfindungsgemäße Dichtring eine besonders einfache Querschnittsform aufweisen. In bevorzugter Ausgestaltung ist der erfindungsgemäße Dichtring zu einer Ebene, die senkrecht zur Ebene durch die Symmetrieachse des zweiten Maschinenteils ausgebildet ist, symmetrisch. Dies vereinfacht wiederum die Fertigung eines derartigen Dichtrings und der erfindungsgemäße Dichtring kann problemlos für Anwendungsfälle eingesetzt werden, bei denen Druckwechsel von der einen Nutflanke zur anderen Nutflanke stattfinden.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zuverstehen, sondern haben vielmehr beispielhaften Charakter.

Die Erfindung ist in der Zeichnung dargestellt und wird anhand von Ausführungsbeispielen näher erläutert. Es zeigen:
- Fig. 1: eine erfindungsgemäße Dichtungsanordnung im drucklosen Zustand mit einem im Querschnitt trapezförmigen Dichtring;
- Fig. 2: ein weiteres Ausführungsbeispiel einer erfindungsgemäßen Dichtungsanordnung mit einem im Querschnitt T-förmigen Dichtring;
- Fig.3a,3b: eine aus unterschiedlichen Richtungen druckbeaufschlagte erfindungsgemäße Dichtungsanordnung;
- Fig. 4: eine Dichtungsanordnung mit einem sowohl im drucklosen wie im druckbeaufschlagten Zustand im Querschnitt asymmetrischen Dichtring;
- Fig. 5 und 6: weitere Ausführungsbeispiele einer erfindungsgemäßen Dichtungsanordnung mit dem drucklosen und dem druckbeaufschlagten Zustand dargestellten Einbaulagen.

Die einzelnen Figuren der Zeichnung zeigen teilweise stark schematisiert den erfindungsgemäßen Gegenstand und sind nicht maßstäblich zu verstehen. Die Gegenstände der einzelnen Figuren sind teilweise stark vergrößert dargestellt, damit der Aufbau besser gezeigt werden kann.

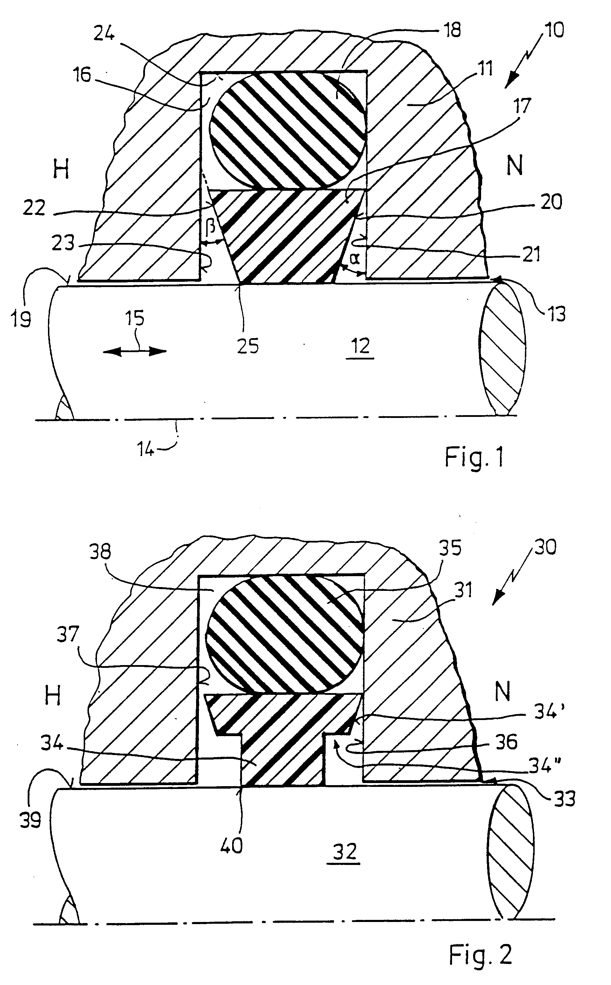

Fig. 1 zeigt eine Dichtungsanordnung 10 mit einem ersten Maschinenteil 11 und einem zweiten Maschinenteil 12. Die Dichtungsanordnung 10 dichtet einen Spalt 13 zwischen den Maschinenteilen 11, 12 ab. Das zweite Maschinenteil 12 kann um eine Achse 14 rotieren, während das erste Maschinenteil 11 raumfest angeordnet ist. In einer weiteren Ausführungsform bewegt sich das zweite Maschinenteil 12 in Pfeilrichtungen 15 und das erste Maschinenteil 11 ruht. Die Dichtungsanordnung 10 ist auch für den umgekehrten Bewegungsablauf der Maschinenteile 11, 12 einsetzbar, bei dem das zweite Maschinenteil 12 ruht und sich das erste Maschinenteil 11 bewegt. Dabei kann das erste Maschinenteil 11 eine Rotationsbewegung zur Achse 14 bzw. eine Axialbewegung längs der Achse 14 durchführen.

Die Dichtungsanordnung 10 ist in der Fig. 1 im drucklosen Zustand dargestellt. In einer Nut 16 des ersten Maschinenteils 11 ist ein Dichtring 17 aus einem zähelastischen Material, bevorzugt aus Polytetrafluorethylen oder aus Polyurethan, und ein Vorspannelement 18 aus einem gummielastischen Material angeordnet. Bei dem Vorspannelement 18 handelt es sich bevorzugt um einen O-Ring bzw. um einen Vierlippendichtring. Je nach Vorgabe preßt das Vorspannelement 18 im drucklosen Zustand der Dichtungsanordnung 10 den Dichtring 17 mehr oder weniger stark mit einer vorgegebennen Kraft auf eine Umfangsfläche 19 des zweiten Maschinenteils 12.

Der Dichtring 17 weist im Ausführungsbeispiel der Fig. 1 einen trapezförmigen Querschnitt auf. Mit einer ersten Dichtringfläche 20, die radial zur Achse 14 gerichtet ist, bildet der Dichtring 17 mit einer niederdruckseitigen Nutflanke 21 einen Winkel α.

Der sich dadurch bildende Keilspalt öffnet sich zur Umfangsfläche 19 hin. Mit einer zweiten Dichtringfläche 22 und einer hochdruckseitigen Nutflanke 23 ergibt sich ein Winkel β. In der Figur ist der den Winkel β aufspannende Bereich mit unterbrochener Linie bis zur hochdruckseitigen Nutflanke 23 verlängert. Im drucklosen Zustand der Dichtungsanordnung beträgt der Winkel α, β zwischen 10° und 40°.

H kennzeichnet in der Figur die Hochdruckseite und N die Niederdruckseite. Das Vorspannelement 18 stützt sich in der Figur am Nutgrund 24 ab.

Wird die Dichtungsanordnung 10 der Fig. 1 druckbelastet, so verschwenkt der Dichtring 17 derart, daß sich der Winckel α verkleinert und der Winckel β vergrößert sich. Dabei bildet sich an der zur Umfangsfläche 19 gerichteten Fläche des Dichtrings 17 eine Dichtkante 25 aus.

Fig. 2 zeigt eine weitere Ausführungsform einer Dichtungsanordnung 30 zwischen einem ersten Maschinenteil 31 und einem zweiten Maschinenteil 32. Mit der Dichtungsanordnung 30 wird ein Spalt 33 zwischen den Maschinenteilen 31, 32 abgedichtet. Die Dichtungsanordnung 30 setzt sich aus einem im Querschnitt T-förmigen Dichtring 34 und aus einem Vorspannelement 35 zusammen. Wirkt noch kein hydraulischer Druck von der Hochdruckseite H auf die Dichtungsanordnung 30, so kann die Dichtungsanordnung 30 im Querschnitt die in der Fig. 2 gezeigte Form aufweisen. Dabei kann sowohl der Dichtring 34 wie auch das Vorspannelement 35 von Nutflanken 36, 37 einer Nut 38 beabstandet sein. Eine Dichtringfläche 34′ grenzt an einen Absatz 34˝, der wie auch die Dichtringfläche 34′ selbst, der Nuttlanke 36 gegenüberliegt. Unter hydraulischer Druckbelastung verfährt die Dichtungsanordnung soweit, daß sie zuerst an der niederdruckseitigen Nutflanke 36 anliegt und danach in eine Betriebsstellung verschwenkt. Dabei bildet sich an einer Umfangsfläche 39 eine Dichtkante 40 aus. Zwischen der Umfangsfläche 39 und der dazu diametralen Fläche des Dichtringes 34 stellt sich zur Niederdruckseite N ein sich öffnender Keilspalt hin ein.

Sowohl der Dichtring 17 der Fig. 1 wie auch der Dichtring 34 der Fig. 2 sind im drucklosen Zustand symmetrisch ausgebildet.

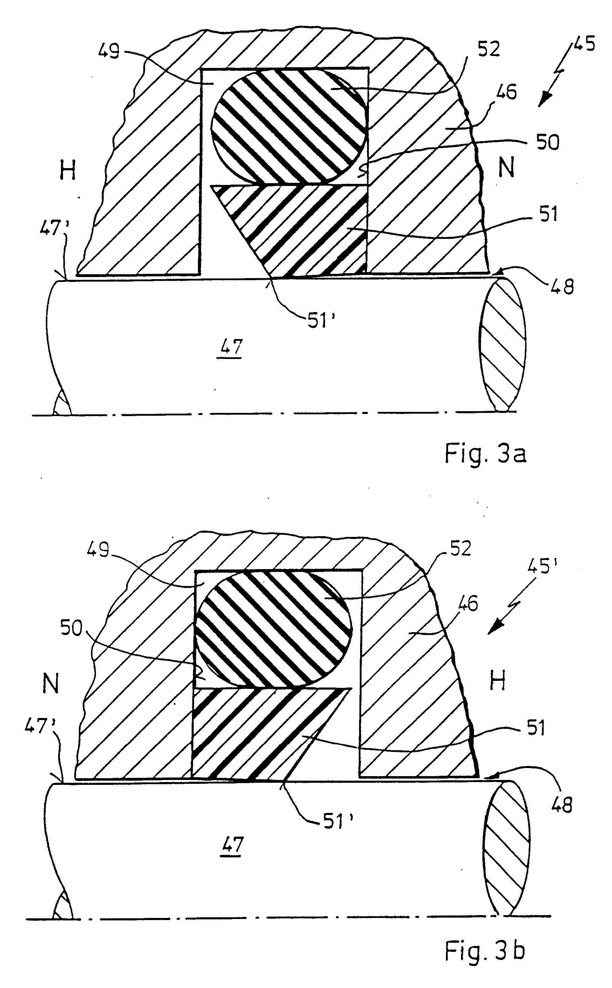

Fig. 3a und Fig. 3b zeigen eine Dichtungsanordnung 45, 45′, die von der Hochdruckseite H aus mit einem hydraulischen Druck beaufschlagt ist. Ein erstes Maschinenteil 46 ist von einem zweiten Maschinenteil 47 beabstandet, so daß sich ein Spalt 48 einstellt. Über die Dichtungsanordnung 45, 45′ ist dieser Spalt 48 abgedichtet. In den Fig. 3a und 3b ist der hydraulische Druck aus unterschiedlichen Richtungen auf die Dichtungsanordnung 45, 45′ gerichtet. In einer Nut 49 des ersten Maschinenteils 46 verfährt je nach hydraulischer Druckrichtung die Dichtungsanordnung 45, 45′, bis sie zur Anlage an eine niederdruckseitige Nutflanke 50 kommt. In der Betriebsstellung ist ein Dichtring 51 verschwenkt, so daß er mit seiner im drucklosen Zustand zur Nutflanke 50 schräggerichteten Fläche unter hydraulischem Druck ganzflächig an der Nutflancke 50 anliegt. Der Dichtring 51 ist über ein Vorspannelement 52, das sich am Nutgrund 53 abstützt, vorgespannt. Gegenüber einer Umfangsfläche 47′ ist eine Dichtkante 51′ ausgebildet.

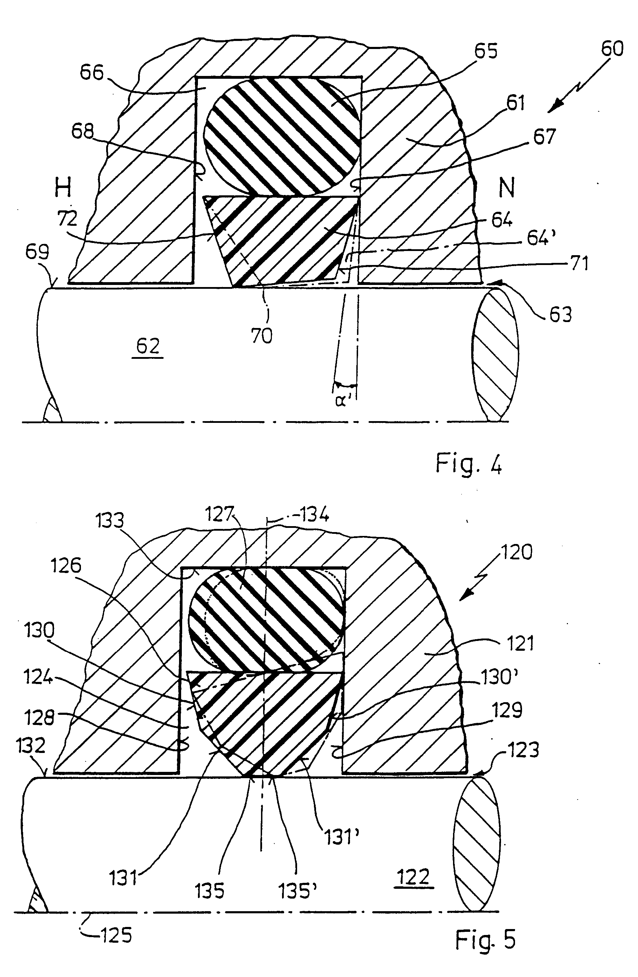

Fig. 4 zeigt eine weitere Dichtungsanordnung 60 zwischen einem ersten Maschinenteil 61 und einem zweiten Maschinenteil 62. Ein Spalt 63 wird über einen asymmetrisch ausgebildeten Dichtring 64, 64′ und über ein Vorspannelement 65 abgedichtet. In einer Nut 66 des ersten Maschinenteils 61 ist mit durchgezogenen Linien der Dichtring 64 im drucklosen Zustand nur unter Vorspannung des Vorspannelements 65. Mit strichpunktierten Linien ist der Dichtring 64′ unter Einwirkung eines von der Hochdruckseite H aus wirkenden hydraulischen Druckes dargestellt. Im druckbeaufschlagten Zustand stützt sich der Dichtring 64, 64′ und das Vorspannelement 65 nicht nur an einer niederdruckseitigen Nutflanke 67 ab, sondern der Dichtring 64′ liegt über einen größeren Flächenabschnitt an der Nutflanke 67 an. Der Dichtring 64′ und das Vorspannelement 65 sind in Betriebsstellung von einer Nutflanke 68 beabstandet. In Betriebsstellung bildet sich gegenüber einer Umfangsfläche 69 eine Dichtkante 70 aus, die ringförmig an der Umfangsfläche 69 anliegt. Die der Umfangsfläche 69 gegenüberliegende Fläche des Dichtringes 64, 64′ bildet mit der Umfangsfläche 69 einen Keilspalt, der sich zur Niederdruckseite N hin öffnet. In Betriebsstellung bleibt zwischen der niederdruckseitigen Nutflanke 67 und der dazu radial gerichteten Dichtringfläche 71 ein Winckel α′ bestehen. Damit kann sich die Dichtungsanordnung 60 bei einem Verschleiß an der Dichtkante 70 selbsttätig nachstellen. Die sich zwischen der Nutflanke 67, 68 und der Dichtringfläche 71, 72 einstellenden Winkel sind sowohl im drucklosen wie auch im druckbeaufschlagten Zustand unterschiedlich.

Fig. 5 zeigt ein Ausführungsbeispiel einer erfindungsgemäßen Dichtungsanordnung 120, wie sie zwischen einem ersten Maschinenteil 121 und einem zweiten Maschinenteil 122, wobei die Maschinenteile 121, 122 durch einen Spalt 123 voneinander beabstandet sind. Die Dichtungsanordnung ist in eine Nut 124 eingebaut. Das erste und zweite Maschinenteil 121, 122 ist zu einer ersten Achse 125 konzentrisch. In der Nut 124 ist ein Dichtring 126 aus einem zähelastischen Werkstoff und ein Vorspannelement 127 aus einem gummielastischen Werkstoff angeordnet. In der Figur sind die Nutflanken mit 128, 129 bezeichnet. Zu den Nutflanken 128, 129 weist eine erste Stirnfläche 130, 130′ und eine zweite Stirnfläche 131, 131′. Die erste Stirnfläche 130, 130′ ist zur zweiten Stirnfläche 131, 131′ abgewinkelt. Die erste Stirnfläche 130, 130′ und die zweite Stirnfläche 131, 131′ sind unterschiedlich stark zu einer Umfangsfläche 132 des zweiten Maschinenteils 122 geneigt. Das Vorspannelement 127 preßt mit einer vorgegebenen Vorspannung den Dichtring 126 gegen die Umfangsfläche 132. Dabei stützt sich das Vorspannelement 127 am Nutgrund 133 der Nut 124 ab. Der Dichtring 126 ist in der Figur zu einer Ebene, die durch eine zweite Achse 134 verläuft, im drucklosen Zustand symmetrisch aufgebaut. Die durch die zweite Achse 134 verlaufende Ebene erstreckt sich senkrecht zur Ebene, die durch die erste Achse 125 verläuft. Im drucklosen Zustand bildet der Dichtring 126 eine ringflächige Dichtkante 135 aus, mit der er dichtend und vorgespannt auf die Umfangsfläche 132 gepreßt ist.

Ist die Dichtungsanordnung 120 druckbeaufschlagt, so verschwenkt der Dichtring 126 in eine Lage, wie sie strichpunktiert in der Figur 7 eingezeichnet ist. Das Vorspannelement 127 nimmt im druckbeaufschlagten Zustand eine Lage ein, die mit Punkten in der Figur beispielhaft gezeigt ist. Durch unterschiedlich zueinander angestellte Stirnflächen 130, 130′ und 131, 131′ können unterschiedlich große Verschwenkwinkel vom drucklosen zum druckbeaufschlagten Zustand der Dichtungsanordnung definiert vorgegeben werden und ebenfalls kann die Druckentlastung der Dichtkante im druckbeaufschlagten Zustand des Dichtrings mehr oder weniger stark entlastet werden.

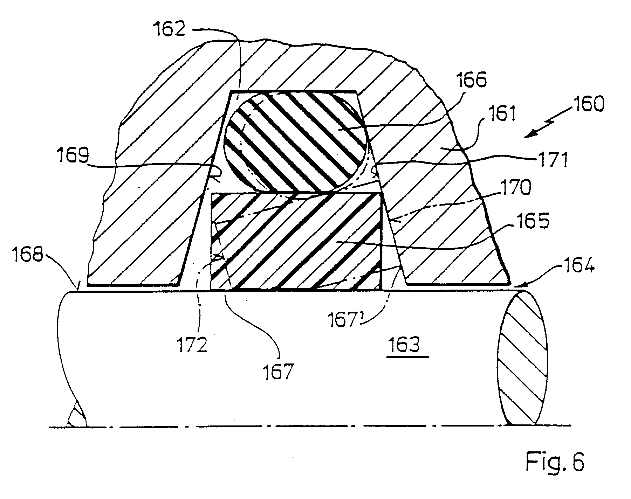

Eine weitere Ausführungsform einer erfindungsgemäßen Dichtungsanordnung 160 zeigt die Figur 6. In einem ersten Maschinenteil 161 ist eine im Querschnitt trapezförmige Nut eingestochen, die die Dichtungsanordnung 160 aufnimmt. Die Nut 162 ist zu einem zweiten Maschinenteil 163 hinweisend offen. Die Maschinenteile 161, 163 sind voneinander durch einen Spalt 164 beabstandet. Die Dichtungsanordnung 160 setzt sich aus einem im Querschnitt rechteckförmigen und zähelastischen Dichtring 165 und einem im Querschnitt ring- bis ovalförmigen Vorspannelement 166 zusammen. Im drucklosen Zustand der Dichtungsanordnung bildet der Dichtring 165 eine flächenhafte Dichtkante 167, die auf einer Umfangsfläche 168 des zweiten Maschinenteils 163 dichtend aufliegt.

Im druckbaufschlagten Zustand der Dichtungsanordnung 160 ist, sofern das Hochdruckmedium an einer ersten Nutflanke 169 ansteht, gekippt, von der Nutflanke 169 beabstandet und der Dichtring 165 liegt über eine Stirnfläche 170 an einer zweiten Nutflanke 171 flächenhaft an. In der Figur ist die druckbeaufschlagte Einbaulage der Dichtungsanordnung 160 strichpunktiert eingezeichnet.

Das Hochdruckmedium kann auch über den Spalt 164 auf die zweite Nutflanke 171 wirken. In diesem Fall verschiebt sich die Dichtungsanordnung 160 zur ersten Nutflanke 169 und über eine zweite Stirnfläche 172 liegt dann der Dichtring 165 flächenhaft an der ersten Nutflanke 169 an. Das Pressungsmaximum liegt dann in einer linienförmig ausgebildeten Dichtkante 167′, die der Dichtkante 167 gegenüberliegt.

Über verschiedene Querschnittsformen der Vorspannelemente, wie z.B. Vierlippendichtringe, kann die Pressungsverteilung sowohl im drucklosen wie auch im druckbeaufschlagten Zustand der Dichtungsanordnung 160 definiert beinflußt werden.

## Patentansprüche

1. Dichtungsanordnung zwischen zwei zueinander hin- und herbewegten konzentrischen Maschinenteilen (11, 12; 31, 32; 46, 47; 61, 62) mit einem Dichtring (17; 34; 51; 64, 64′) aus zähelastischem Kunststoff und einem den Dichtring (17; 34; 51; 64, 64′) radial spannenden Vorspannring (18; 35; 52; 65) aus einem gummielastischen Werkstoff, wobei das erste Maschinenteil (11; 31; 46; 61) eine Nut (16; 38; 49; 66) aufweist, die den Dichtring (17; 34; 51; 64, 64′) und den Vorspannring (18; 35; 52; 65) aufnimmt, und wobei, im drucklosen und/oder stationären Zustand, der Dichtring (17; 34; 51; 64, 64′) mit einer Dichtfläche an einer Umfangsfläche (19; 39; 47′; 69) des zweiten Maschinenteils (12; 32; 47; 62) anliegt und, in radialer Richtung zur Achse (14) des zweiten Maschinenteils (12; 32; 47; 62) gesehen, zumindest teilweise von einer niederdruckseitigen Nutflanke (21; 36; 50; 67) der Nut (16; 38; 49; 66) beabstandet ist, dadurch gekennzeichnet, daß der Dichtring (17; 34; 51; 64) unter Druckbeaufschlagung und/oder durch die Reibkraft zwischen dem Dichtring (17; 34; 51; 64, 64′) und der Umfangsfläche (19; 39; 47′; 69) derart zur Niederdruckseite N hin verschwenkbar ist, daß der Dichtring (17; 34; 51; 64, 64′) an der niederdruckseitigen Nutflanke (21; 36; 50; 67) der Nut (16; 38; 49; 66) anliegt und gegenüber der Umfangsfläche (19; 39; 47′; 69) eine Dichtkante (25; 40; 51′; 70) ausbildet, wobei der Dichtring (17; 34; 51; 64, 64′) mit der Umfangsfläche (19; 39; 47′; 69) einen sich zur Niederdruckseite N hin öffnenden Keilspalt bildet.

2. Dichtungsanordnung zwischen zwei zueinander rotierenden konzentrischen Maschinenteilen (11, 12; 31, 32; 46, 47; 61, 62) mit einem Dichtring (17; 34; 51; 64, 64′) aus zähelastischem Kunststoff und einem den Dichtring (17; 34; 51; 64, 64′) radial spannenden Vorspannring (18; 35; 52; 65) aus einem gummielastischen Werkstoff, wobei das erste Maschinenteil (11; 31; 46; 61) eine Nut (16; 38; 49; 66) aufweist, die den Dichtring (17; 34; 51; 64, 64′) und den Vorspannring (18; 35; 52; 65) aufnimmt, und wobei, im drucklosen Zustand, der Dichtring (17; 34; 51; 64, 64′) mit einer Dichtfläche an einer Umfangsfläche (19; 39; 47′; 69) des zweiten Maschinenteils (12; 32; 47; 62) anliegt und, in radialer Richtung zur Achse (14) des zweiten Maschinenteils (12; 32; 47; 62) gesehen, zumindest teilweise von einer niederdruckseitigen Nutflanke (21; 36; 50; 67) der Nut (16; 38; 49; 66) beabstandet ist, dadurch gekennzeichnet, daß der Dichtring (17; 34; 51; 64, 64′) unter Druckbeaufschlagung derart zur Niederdruckseite N hin verschwenkbar ist, daß der Dichtring (17; 34; 51; 64, 64′) an der niederdruckseitigen Nutflanke (21; 36; 50; 67) der Nut (16; 38; 49; 66) anliegt und gegenüber der Umfangsfläche (19; 39; 47′; 69) eine Dichtkante (25; 40; 51′; 70) ausbildet, wobei der Dichtring (17; 34; 51; 64, 64′) mit der Umfangsfläche (19; 39; 47′; 69) einen sich zur Niederdruckseite N hin öffnenden Keilspalt bildet.

3. Dichtungsanordnung nach Anspruch 1 oder 2, dadurch gekennzeichnet, daß im drucklosen Zustand die niederdruckseitige Nutflanke (21; 36; 50; 67) mit einer dazu gegenüberliegenden radial gerichteten ersten Dichtringfläche (20) einen spitzen Winkel α bildet.

4. Dichtungsanordnung nach Anspruch 3, dadurch gekennzeichnet, daß an der ersten Dichtringfläche (34′) ein Absatz (34˝) ausgebildet ist.

5. Dichtungsanordnung nach einem der Ansprüche 1 bis 4, dadurch gekennzeichnet, daß im drucklosen Zustand eine der Hochdruckseite H zugewandte zweite Dichtringfläche (22) mit einer hochdruckseitigen Nutflanke (23) der Nut (16) einen spitzen Winkel β bildet.

6. Dichtungsanordnung nach Anspruch 3 oder 5, dadurch gekennzeichnet, daß der spitze Winkel α ein Winkel zwischen 10° und 30° ist und daß der spitze Winkel β ein Winkel zwischen 20° und 40° ist.

7. Dichtungsanordnung nach einem der Ansprüche 1 bis 6, dadurch gekennzeichnet, daß der Dichtring (17; 34) im drucklosen Zustand symmetrisch ausgebildet ist.

8. Dichtungsanordnung nach einem der Ansprüche 1 bis 7, dadurch gekennzeichnet, daß der Dichtring (17; 34; 64) aus dem Material Polytetrafluorethylen gefertigt ist.

9. Dichtungsanordnung nach einem der Ansprüche 1 bis 7, dadurch gekennzeichnet, daß der Dichtring (17; 34; 64) aus dem Material Polyurethan gefertigt ist.

## Claims

1. Sealing device between two concentric machine components (11, 12; 31, 32; 46, 47; 61, 62) which move back and forth with respect to each other with a sealing ring (17; 34; 51; 64, 64′) made from a tough-elastic plastic and a biasing ring (18; 35; 52; 65) made from a resilient elastic material which radially biases the sealing ring (17; 34; 51; 64, 64′), whereby the first machine component (11; 31; 46; 61) exhibits a groove (16; 38; 49; 66) which accepts the sealing ring (17; 34; 51; 64; 64′) and the biasing ring (18; 35; 52; 65) and whereby in the pressure-less and/or stationary state, the sealing ring (17; 34; 51; 64; 64′) seats with a sealing surface on a peripheral surface (19; 39; 47′; 69) of the second machine component (12; 32; 47; 62) and, as seen in the radial direction relative to the axis (14) of the second machine component (12; 32; 47; 62), is at least partially separated from a low-pressure side (21; 36; 50; 67) of the groove (16; 38; 49; 66) characterized in that, the sealing ring (17; 34; 51; 64) is, under the application of pressure and/or through the frictional force between the sealing ring (17; 34; 51; 64, 64′) and the peripheral surface (19; 39; 47′; 69), tiltable towards the low-pressure side N in such a fashion that the sealing ring (17; 34; 51; 64, 64′) seats on the low-pressure side (21; 36; 50; 67) of the groove (16; 38; 49; 66) and forms a sealing edge (25; 40; 51′; 70) with respect to the peripheral surface (19; 39; 47′; 69), whereby the sealing ring (17; 34; 51; 64, 64′) forms, with the peripheral surface (19; 39; 47′; 69), a wedge-shaped gap which opens towards the low-pressure side N.

2. Sealing device between two concentric machine components (11, 12; 31, 32; 46, 47; 61, 62) which rotate with respect to each other with a sealing ring (17; 34; 51; 64, 64′) made from a tough plastic and a biasing ring (18; 35; 52; 65) made from a resilient elastic material which radially biases the sealing ring (17; 34; 51; 64, 64′), whereby the first machine component (11; 31; 46; 61) exhibits a groove (16; 38; 49; 66) which accepts the sealing ring (17; 34; 51; 64, 64′) and the biasing ring (18; 35; 52; 65) and whereby, in the pressure-less state, the sealing ring (17; 34; 51; 64, 64′) seats, with a sealing surface, on a peripheral surface (19; 39; 47′; 69) of the second machine component (12; 32; 47; 62), and, as viewed in the radial direction with respect to the axis (14) of the second machine component (12; 32; 47; 62) is at least partially separated from a low-pressure side (21; 36; 50; 67) of the groove (16; 38; 49; 66) characterized in that the sealing ring (17; 34; 51; 64, 64′), under the application of pressure, is pivotable towards the low-pressure side N in such a fashion that the sealing ring (17; 34; 51; 64, 64′) seats on the low-pressure side (21; 36; 50; 67) of the groove (16; 38; 49; 66) and forms, with respect to the peripheral surface (19; 39; 47′; 69), a sealing edge (25; 40; 51′; 70), whereby the sealing ring (17; 34; 51; 64, 64′) forms, with the peripheral surface (19; 39; 47′; 69), a wedge-shaped gap which opens towards the low-pressure side N.

3. Sealing device according to claim 1 or 2, characterized in that, in the pressure-less state, the low pressure side of the groove (21; 36; 50; 67) forms, with respect to an oppositely lying radially directed first sealing ring surface (20), an acute angle α.

4. Sealing device according to claim 3, characterized in that a step (34˝) is formed on the first sealing ring surface (34′).

5. Sealing device according to one of the claims 1 through 4, characterized in that, in the pressure-less state, a second sealing ring surface (22) facing the high-pressure side H forms, with a high pressure side (23) of the groove (16), an acute angle β.

6. Sealing device according to claim 3 or 5, characterized in that the acute angle α is an angle between 10° and 30° and that the acute angle β is an angle between 20° and 40°.

7. Sealing device according to one of the claims 1 through 6, characterized in that the sealing ring (17; 34) is symmetrically configured in the pressure-less state.

8. Sealing device according to one of the claims 1 through 7, characterized in that the sealing ring (17; 34; 64) is manufactured from the material polytetrafluoroethylene.

9. Sealing device according to one of the claims 1 through 7, characterized in that the sealing ring (17; 34; 64) is manufactured from the material polyurethane.

## Revendications

1. Dispositif d'étanchéité entre deux pièces de machine (11, 12 ; 31, 32 ; 46, 47 ; 61, 62) concentriques déplacées en va-et-vient l'une par rapport à l'autre, comprenant un anneau d'étanchéité (17 ; 34 ; 51 ; 64, 64′) en matière synthétique viscoélastique et un anneau de précontrainte (18 ; 35 ; 52 ; 65) en un matériau à élasticité caoutchoutique qui serre radialement l'anneau d'étanchéité (17 ; 34 ; 51 ; 64, 64′), la première pièce de machine (11 ; 31 ; 46 ; 61) présentant une rainure (16 ; 38 ; 49 ; 66) qui reçoit l'anneau d'étanchéité (17 ; 34 ; 51 ; 64, 64′) et l'anneau de précontrainte (18 ; 35 ; 52 ; 65), l'anneau d'étanchéité (17 ; 34 ; 51 ; 64, 64′) à l'état sans pression et/ou stationnaire étant en appui par une surface d'étanchéité sur une surface périphérique (19 ; 39 ; 47′ ; 69) de la deuxième pièce de machine (12 ; 32 ; 47 ; 62) et, vu dans la direction radiale par rapport à l'axe (14) de la deuxième pièce de machine (12 ; 32 ; 47 ; 62), étant maintenu à distance au moins partiellement d'un flanc de rainure du côté basse pression (21 ; 36 ; 50 ; 67) de la rainure (16 ; 38 ; 49 ; 66), caractérisé en ce que l'anneau d'étanchéité (17 ; 34 ; 51 ; 64, 64′) peut, lors d'une sollicitation à la pression et/ou par la force de frottement entre l'anneau d'étanchéité (17 ; 34 ; 51 ; 64, 64′) et la surface périphérique (19 ; 39 ; 47′ ; 69), être amené à pivoter vers le côté basse pression N de façon que l'anneau d'étanchéité (17 ; 34 ; 51 ; 64, 64′) soit en appui sur le flanc de rainure du côté basse pression (21 ; 36 ; 50 ; 67) de la rainure (16 ; 38 ; 49 ; 66) et réalise, par rapport à la surface périphérique (19 ; 39 ; 47′ ; 69), un bord d'étanchéité (25 ; 40 ; 51′ ; 70), l'anneau d'étanchéité (17 ; 34 ; 51 ; 64, 64′) formant avec la surface périphérique (19 ; 39 ; 47′ ; 69) une fente en forme de coin qui s'ouvre vers le côté basse pression N.

2. Dispositif d'étanchéité entre deux pièces de machine concentriques (11, 12 ; 31, 32 ; 46, 47 ; 61, 62) qui tournent l'une par rapport à l'autre, comprenant un anneau d'étanchéité (17 ; 34 ; 51 ; 64, 64') en matière synthétique viscoélastique et un anneau de précontrainte (18 ; 35 ; 52 ; 65) en un matériau à élasticité caoutchoutique qui serre radialement l'anneau d'étanchéité (17 ; 34 ; 51 ; 64, 64′), la première pièce de machine (11 ; 31 ; 46 ; 61) présentant une rainure (16 ; 38 ; 49 ; 66) qui reçoit l'anneau d'étanchéité (17 ; 34 ; 51 ; 64, 64′) et l'anneau de précontrainte (18 ; 35 ; 52 ; 65), l'anneau d'étanchéité (17 ; 34 ; 51 ; 64, 64′) à l'état sans pression étant en appui par une surface d'étanchéité sur une surface périphérique (19 ; 39 ; 47′ ; 69) de la deuxième pièce de machine (12 ; 32 ; 47 ; 62) et, vu dans la direction radiale par rapport à l'axe (14) de la deuxième pièce de machine (12 ; 32 ; 47 ; 62), étant maintenu à distance au moins partiellement d'un flanc de rainure du côté basse pression (21 ; 36 ; 50 ; 67) de la rainure (16 ; 38 ; 49 ; 66), caractérisé en ce que l'anneau d'étanchéité (17 ; 34 ; 51 ; 64, 64′) peut, lors d'une sollicitation à la pression, être amené à pivoter vers le côté basse pression N de telle façon que l'anneau d'étanchéité (17 ; 34 ; 51 ; 64, 64′) soit en appui sur le flanc de rainure du côté basse pression (21 ; 36 ; 50 ; 67) de la rainure (16 ; 38 ; 49 ; 66) et réalise, par rapport à la surface périphérique (19 ; 39 ; 47′; 69), un bord d'étanchéité (25 ; 40 ; 51′ ; 70), l'anneau d'étanchéité (17 ; 34 ; 51 ; 64, 64′) formant avec la surface périphérique (19 ; 39 ; 47′ ; 69) une fente en forme de coin qui s'ouvre vers le côté basse pression N.

3. Dispositif d'étanchéité suivant l'une des revendications 1 et 2, caractérisé en ce que, à l'état sans pression, le flanc de rainure du côté basse pression (21 ; 36 ; 50 ; 67) forme un angle aigu α avec une première surface d'anneau d'étanchéité (20) qui est dirigée radialement en faisant face à ce flanc.

4. Dispositif d'étanchéité suivant la revendication 3, caractérisé en ce qu'un épaulement (34˝) est réalisé sur la première surface d'anneau d'étanchéité (34′).

5. Dispositif d'étanchéité suivant l'une des revendications 1 à 4, caractérisé en ce qu'à l'état sans pression une deuxième surface d'anneau d'étanchéité (22), tournée vers le côté haute pression H, forme un angle aigu β avec un flanc du côté haute pression (23) de la rainure (16).

6. Dispositif d'étanchéité suivant l'une des revendications 3 et 5, caractérisé en ce que l'angle aigu α est un angle entre 10° et 30° et en ce que l'angle aigu β est un angle entre 20° et 40°.

7. Dispositif d'étanchéité suivant l'une des revendications 1 à 6, caractérisé en ce que l'anneau d'étanchéité (17 ; 34) est réalisé de manière symétrique à l'état sans pression.

8. Dispositif d'étanchéité suivant l'une des revendications 1 à 7, caractérisé en ce que l'anneau d'étanchéité (17 ; 34 ; 64) est fabriqué en la matière polytétrafluoroéthylène.

9. Dispositif d'étanchéité suivant l'une des revendications 1 à 7, caractérisé en ce que l'anneau d'étanchéité (17 ; 34 ; 74) est fabriqué en la matière polyuréthanne.
